Europäisches Patentamt

European Patent Office

Office européen des brevets

(11) Publication number: **0 235 876 B1**

# EUROPEAN PATENT SPECIFICATION

(45) Date of publication of patent specification: **21.04.93**

(51) Int. Cl.5: **C08L  23/02**, C08L 77/00, C08F 8/46

(21) Application number: **87300085.5**

(22) Date of filing: **07.01.87**

(54) **Thermoplastic resin composition.**

(30) Priority: **07.01.86 JP 160/86**
**07.01.86 JP 161/86**
**25.03.86 JP 64943/86**
**25.03.86 JP 64944/86**

(43) Date of publication of application:
**09.09.87 Bulletin  87/37**

(45) Publication of the grant of the patent:
**21.04.93 Bulletin  93/16**

(84) Designated Contracting States:
**BE DE FR GB IT NL**

(56) References cited:
**EP-A- 0 002 761**
**EP-A- 0 194 705**

**PATENT ABSTRACTS OF JAPAN, vol. 6, no. 68 (C-100)[946], 30th April 1982**

(73) Proprietor: **TONEN SEKIYUKAGAKU K.K.**
**1-1, Tsukiji, 4-Chome**
**Chuo-Ku Tokyo 104(JP)**

(72) Inventor: **Fujita, Yuji**
**4-3-321, Nishitsurugaoka 1-chome Ooi-machi Iruma-gun Saitama-ken(JP)**
Inventor: **Sakuma, Masato**
**17-21, Harigaya 2-chome**
**Urawa-shi Saitama-ken(JP)**
Inventor: **Kitano, Kissho**
**4-2-225, Nishitsurugaoka 1-chome Ooi-machi Iruma-gun Saitama-ken(JP)**
Inventor: **Sakaizawa, Masao**
**4-6, Nishitsurugaoka 1-chome Ooi-machi Iruma-gun Saitama-ken(JP)**
Inventor: **Yagi, Yukihiko**
**4-6, Nishitsurugaoka 1-chome Ooi-machi Iruma-gun Saitama-ken(JP)**
Inventor: **Yamamoto, Noboru**
**52-13-101, Hayamiya 1-chome**
**Nerima-ku Tokyo(JP)**
Inventor: **Yokokura, Tadashi**
**87, Yarai-cho**
**Shinjuku-ku Tokyo(JP)**

(74) Representative: **Baverstock, Michael George Douglas et al**
**BOULT, WADE & TENNANT 27 Furnival Street London, EC4A 1PO (GB)**

**Description**

This invention relates to a thermoplastic resin composition, more particularly, a thermoplastic resin composition comprising polyamide and a modified polyolefin-containing mixture

It has hitherto been known to blend polypropylene and polyamide for the purpose of improving the mechanical strength, heat resistance and dyeing property of polypropylene, typical of crystalline polyolefins, and simultaneously improving the water absorbing property and decrease in mechanical properties due to water absorption. However, a resin composition obtained by merely melting and blending polypropylene and polyamide does not have the desired excellent properties because of interfacial delamination due to the low compatibility thereof, resulting in a deterioration of the surface luster and dynamic properties.

In order to improve the compatibility of polypropylene and polyamide, it has been proposed to add a modified polypropylene obtained by reacting polypropylene with an unsaturated carboxylic acid anhydride to the polypropylene and various compositions are known, for example, a composition comprising an unsaturated carboxylic acid-added polyolefin optionally diluted with the polyolefin, polyamide and a filler (Japanese Patent Application OPI (Kokai) No. 123158/1979), a composition comprising polyamide, a modified polyolefin or modified elastomer and non-modified polyolefin (Japanese Patent Application OPI (Kokai) No. 165952/1980), a composition comprising a modified polyolefin with a specified quantity of an acid anhydride, polyamide and a crystalline polyolefin (Japanese Patent Application OPI (Kokai) No. 232135/1984 and a composition comprising polyamide and two kinds of modified polyolefins (Japanese Patent Application OPI (Kokai) No. 177073/1985.

Furthermore, a composition comprising a melted and blended mixture of polyamide and a modified polyolefin (Japanese Patent Application OPI (Kokai) No. 118735/1985) and a composition comprising a melted and blended mixture of specified amounts of polyamide and a polyolefin, an unsaturated carboxylic acid or derivative thereof and a peroxide (Japanese Patent Application OPI (Kokai) No. 49018/1985) have been proposed.

However, the addition of modified polyolefins is insufficient for improving the properties such as impact resistance and surface property and accordingly, compositions containing modified products of low-crystallinity or amorphous polymers with unsaturated carboxylic acid anhydrides have been proposed, for example, a composition comprising polyamide and a modified product of a mixture of a crystalline polyolefin and low-crystallinity or amorphous ethylene-α-olefin copolymer (Japanese Patent Application OPI (Kokai) No. 8246/1982), a composition comprising a modified polypropylene, polyamide, a modified product of low-crystallinity or amorphous ethylene-α-olefin copolymer and an inorganic filler (Japanese Patent Application OPI (Kokai) No. 53550/1985), a composition comprising polypropylene, polyamide and/or a polyester, a modified product of low-crystallinity or amorphous ethylene-α-olefin copolymer and an inorganic filler (Japanese Patent Application OPI (Kokai) No. 76548/1985) and a composition comprising polypropylene, polyamide and a modified product of low-crystallinity or amorphous propylene-α-olefin copolymer (Japanese Patent Application OPI (Kokai) No. 110740/1985).

In the prior art compositions as described above, those containing no polypropylene which is not modified with unsaturated carboxylic acid have a problem that mechanical properties such as strength and elasticity are not sufficient, and those containing individually modified products of low-crystallinity or amorphous polymers and polypropylene do not have an improved compatibility or sufficiently improved properties. The composition comprising a modified polypropylene and polyamide does not have a sufficiently improved compatibility, while the composition comprising a co-modified mixture of polypropylene and polyamide has a problem that coloring or deterioration of the properties takes place due to degradation of the polypropylene portion.

The present invention provides a thermoplastic resin composition comprising 1 to 95% by weight, preferably 5 to 95% by weight, of a polyamide and 5 to 99% by weight, preferably 5 to 95% by weight, of a chemically co-modified mixture of a polyolefin with a polyamide. In the co-modified mixture, preferably, 1 to 99% by weight of a polyolefin is contained.

In this specification, by "co-modifying" is meant a simultaneous modifying of a mixture of at least two polymers with an unsaturated carboxylic acid or anhydride thereof.

In a first preferred embodiment there is provided a thermoplastic resin composition comprising (A) 5 to 95 parts by weight of a co-modified polyolefin obtained by reacting a mixture comprising 10 to 95 % by weight of a polyolefin and 90 to 5 % by weight of a polyamide with an unsaturated carboxylic acid or derivative thereof, (B) 5 to 95 parts by weight of a polyamide and (C) 0 to 90 parts by weight of a polyolefin, (A) + (B) + (C) being 100 parts by weight, and having a polyolefin unit in an amount of 10 to 90% by weight.

2

In this embodiment, the polyolefin used for the modified polyolefin (A) includes crystalline polymers, for example, homopolymers of ethylene or α-olefins such as propylene, butene-1, pentene-1, hexene-1 and 4-methylpentene-1, copolymers of ethylene with α-olefins and copolymers of two or more α-olefins. These copolymers include random or block copolymers. Moreover, these polyolefins can be used individually or in combination.

Of the above described polyolefins, there are preferably used polymers predominantly containing propylene, for example, polypropylene and random or block copolymers of propylene with ethylene or other α-olefins.

The polyamide used for the modified polyolefin (A) of this embodiment is a high molecular compound having a recurring unit of acid amide (-CONH-) which can be polymerized by (1) ring opening polymerization of lactam, (2) poly-condensation of an aminocarboxylic acid and (3) polycondensation of a diamine and dibasic acid. The polyamide, having the general name "nylon", includes nylon 6, nylon 12, nylon 9, nylon 11, nylon 66 and nylon 610 and above all, nylon 6 and nylon 66 are preferably used. The molecular weight of the polyamide is not particularly limited, but ordinarily, that corresponding to a relative viscosity ($\eta_{rel}$) of at least 0.5, preferably at least 2 is employed.

In this embodiment, the modified polyolefin (A) is generally prepared by grafting to a mixture of the above described polyolefin and polyamide an unsaturated carboxylic acid or derivative thereof in a proportion of 0.001 to 10 % by weight, preferably 0.1 to 5 % by weight. Examples of the unsaturated carboxylic acid or derivative thereof are acrylic acid, maleic acid, fumaric acid, tetrahydrophthalic acid, itaconic acid, citraconic acid, crotonic acid, isocrotonic acid, endobicyclo-(2,2,1)-5-heptene-2,3-dicarboxylic acid, and anhydrides or esters of these acids.

Grafting of a mixture of the polyolefin and polyamide with such an unsaturated carboxylic acid or derivative thereof in this embodiment can be carried out by various known methods, preferably, a method comprising adding the unsaturated carboxylic acid or derivative thereof and a reaction initiator of an organic peroxide for example, organic peroxide such as di-t-butyl peroxide and 2,5-dimethyl-2,5-di-(t-butyl-peroxy)-hexyneto a mixture of the polyolefin and polyamide and then subjecting the resulting mixture to melting and kneading, or a method comprising dissolving the polyolefin and polyamide in a solvent, to which the unsaturated carboxylic acid or derivative thereof and the reaction initiator are added, and subjecting to reaction. The mixing ratio of the polyolefin and polyamide in this case is 10 to 95 % by weight, preferably 20 to 90 % by weight, of the polyolefin and 90 to 5 % by weight, preferably 80 to 10 % by weight, of the polyamide, since if the ratio of the polyolefin is less than 10 % by weight, the hygroscopic property of the composition is increased, thus resulting in deterioration of the properties such as stiffness and in lowering of the compatibility of the polyolefin and polyamide, while if more than 95 % by weight, the compatibility is insufficient to deteriorate the properties. The amounts of the unsaturated carboxylic acid or derivative thereof and the reaction initiator of an organic peroxide, to be added thereto, are preferably 0.001 to 5 parts by weight of the unsaturated carboxylic acid or derivative thereof and 0.001 to 5 parts by weight of the organic peroxide to 100 parts by weight of a mixture of the polyolefin and polyamide. The melting and kneading operation is generally carried out at a temperature at which the components are melted, ordinarily 180 to 300 °C using an extruder, Banbury mixer or rolls. Thus, the modified polyolefin (A) is obtained in which the polyolefin is bonded with the polyamide by graft reaction through the unsaturated carboxylic acid anhydride.

In this embodiment, as the polyamide (B), there can be used those similar to the polyamide used for the above described modified polyolefin (A) and as the polyolefin (C), there can be used those similar to the polyolefin used for the polyolefin (A).

The mixing ratios of the composition in this embodiment are 5 to 95 parts by weight, preferably 10 to 90 parts by weight, of the modified polyolefin (A), 5 to 95 parts by weight, preferably 10 to 90 parts by weight, of the polyamide (B) and 0 to 90 parts by weight, preferably 0 to 80 parts by weight, of the polyolefin (C), (A) + (B) + (C) being 100 parts by weight and the composition having a polyolefin unit (the sum of the polyolefin in the component (A) and the component (C)) in an amount of 10 to 90% by weight, preferably 20 to 80% by weight. If the ratio of the modified polyolefin (A) is less than the above described range, the compatibility of the composition is not improved, while if more than the above described range, the mechanical properties are degraded and coloring tends to take place. If the amount of the polyolefin unit in the composition is less than 10 % by weight, lowering of the stiffness due to the water absorbing property of the polyamide is not improved, while if more than 90 % by weight, improvement of the properties of the polyolefin by the polyamide is not achieved.

Production of the composition of this embodiment is carried out by uniformly mixing the modified polyolefin (A), polyamide (B) and polyolefin (C) in the above described proportion and melting and kneading the mixture. Preferably, the above described components are previously mixed by means of a Henschel

EP 0 235 876 B1

mixer or ribbon blender, kneaded at a temperature at which the components are melted, for example, 180 to 300 ° C by means of an extruder, Banbury mixer or rolls and then pelletized or pulverized.

To the composition of this embodiment can be added various additives for example, heat stabilizers, ultraviolet absorbers, nucleating agents, antistatic agents, lubricants, flame retarders, coloring agents, inorganic fillers such as glass fibers and plasticizers without missing the object of the present invention. These additives can be added during or after preparing the composition.

In a second preferred embodiment of the present invention, there is provided a thermoplastic resin composition comprising (A) 5 to 95 parts by weight of a co-modified polyolefin obtained by reacting mixture of 10 to 95 % by weight of a polyolefin and 90 to 5 % by weight of a polyamide with an unsaturated carboxylic acid or derivative thereof, (B) 5 to 95 parts by weight of a polyamide, (C) 0 to 90 parts by weight of a polyolefin and (D) 5 to 80 parts by weight, based on 100 parts by weight of (A) + (B) + (C), of a low-crystallinity ethylene-$\alpha$-olefin copolymer, and having a polyolefin unit in an amount of 10 to 90% by weight in the composition.

The above described components (A), (B) and (C) are similar to those used in the first preferred embodiment of the present invention.

In this embodiment, as the low-crystallinity ethylene-$\alpha$-olefin copolymer (D), there are preferably used those having an ethylene content of 30 to 85 % by weight, Mooney viscosity $ML_{1+8}$ (127 ° C) of 5 to 300 and degree of crystallinity (by X-ray diffraction method) of at most 40 %, for example, copolymers of ethylene with $\alpha$-olefins such as propylene, butene-1, pentene-1, hexene-1 and 4-methylpentene-1, and copolymers of ethylene, $\alpha$-olefins and non-conjugated dienes. Preferable examples of these copolymers are rubber-like materials such as ethylene-propylene copolymers, ethylene-butene-1 copolymers, propylene-butene-1 copolymers and ethylene-propylene-diene copolymers. The above described low-crystallinity or amorphous ethylene-$\alpha$-olefin copolymers can be chemically modified, partly or completely, with an unsaturated carboxylic acid or derivative thereof, such as exemplified above. In addition, the low-crystallinity ethylene-$\alpha$-olefin copolymers can be blended with other polyolefins such as polyethylene. Addition of these low-crystallinity ethylene-$\alpha$-olefin copolymers to the basic composition of the second embodiment of the present invention results in an improvement of the low temperature impact resistance and addition of the modified ones is more effective.

The mixing ratios of the composition in this embodiment are 5 to 95 parts by weight, preferably 10 to 90 parts by weight, of the modified polyolefin (A), 5 to 95 parts by weight, preferably 10 to 90 parts by weight, of the polyamide (B), 0 to 90 parts by weight, preferably 0 to 80 parts by weight, of the polyolefin (C) and 5 to 80 parts by weight, preferably 10 to 60 parts by weight, based on 100 parts by weight of (A) + (B) + (C), of the low-crystallinity ethylene-$\alpha$-olefin copolymer (D), the composition having a polyolefin unit (the sum of the polyolefin in the component (A) and the polyolefin of the component (C) in an amount of 10 to 90% by weight, preferably 20 to 80 % by weight. If the amount of the modified polyolefin (A) is less than 5 parts by weight, the compatibility of the composition is not improved, while if more than 95 parts by weight, the mechanical properties are degraded and coloring tends to take place. If the amount of the polyamide (B) is less than 5 parts by weight, improvement of the stiffness, impact resistance, heat resistance and gas barrier property due to the polyamide cannot be achieved, while if more than 95 parts by weight, improvement of the hygroscopicity and chemical resistance of the polyamide cannot be achieved. If the amount of the low-crystallinity ethylene-$\alpha$-olefin copolymer (D) is less than 5 parts by weight, improvement of the impact strength at low temperature is insufficient, while if more than 80 parts by weight, the strength, stiffness, heat resistance and surface hardness are deteriorated. If the amount of the polyolefin unit in the composition is less than 10 % by weight, improvement of the anti-hygroscopicity and chemical resistance by the polyolefin cannot be achieved, while if more than 90 % by weight, improvement of the mechanical properties by the polyamide cannot be achieved.

Production of the composition of this embodiment can be carried out by uniformly mixing the modified polyolefin (A), polyamide (B), polyolefin (C) and low-crystallinity ethylene-$\alpha$-olefin copolymer (D) in the above described proportion and melting and kneading the mixture. Preferably, the above described components are previously mixed by a Henschel mixer or ribbon blender, kneaded at a temperature at which the components are melted, for example, 180 to 300 ° C by an extruder, Banbury mixer or rolls and then pelletized or pulverized.

To the composition of this embodiment can be added various additives in an analogous manner to the first embodiment.

In the thermoplastic resin composition according to the present invention, a polyolefin and polyamide are dispersed more finely and uniformly to improve the compatibility thereof, thereby obtaining an excellent surface property as well as mechanical properties and a low water absorbing property. Because of these excellent properties, the composition of the present invention is useful for various industrial materials, in

4

particular, household electric appliances and motorcars.

The following examples are given in order to illustrate the present invention in greater detail. The parts and percents used in the examples are to be taken as those by weight unless otherwise indicated.

The test methods are as follows:

(1) MRF: JIS K 7210 (load 2.16 kg, 230 °C)

(2) Tensile Strength, Tensile Elongation at Breakage: ASTM D 638

(3) Flexual Strength, Flexual Modulus: ASTM D 790

(4) Izod Impact Strength: ASTM D 256 (23 °C),notched

(5) Luster (Gloss): ASTM D 523

(6) Water Absorbing Capacity: obtained by immersing a test piece in warm water at 50 °C for 10 hours and calculating from the weight difference between during molding the test piece (dry state) and after immersing

$$\textbf{Water Absorbing Ratio (\%) } = \frac{B - A}{B} \times 100$$

A:   weight of test piece during molding

B:   weight of test piece after immersing

In Tests (2) to (5) of Examples 9 to 24 and Comparative Examples 7 to 12, in particular, measurement were carried out by molding test pieces and immersing in warm water at 50 °C for 10 hours (regarding as equilibrium water-absorbed state).

Examples 1 to 8

Preparation of Modified Polyolefins

A homopolypropylene (MFR = 3.0), ethylene-propylene copolymer (manufactured by Japan Synthetic Rubber Co., JSR EPO7P -commercial name-, ethylene content 73 %, Mooney viscosity $ML_{1+4}$ (100 °C)70, hereinafter referred to as EPR), ethylene-butene-1 copolymer (manufactured by Mitsui Sekiyu Kagaku Co., TAFMER A 4085 -commercial name-, Mooney viscosity $ML_{1+4}$ (100 °C)60, hereinafter referred to as EBR), ethylene-propylene-diene copolymer (manufactured by Exxon Chemical Co, VISTALON 37081 -commercial name-, Mooney viscosity $ML_{1+8}$ (127 °C)50, hereinafter referred to as EPDM) and linear low density polyethylene (manufactured by Nippon Unicar Co., NLC 5391 -commercial name-, hereinafter referred to as LLDPE) were blended in proportions as shown in Table 1. To 100 parts of each of the resulting mixtures were added 0.3 part of endobicyclo-(2,2,1)-5-heptene-2,3-dicarboxylic acid anhydride (hereinafter referred to as HA) and 0.3 part of a reaction initiator (2,5-dimethyl-2,5-di-(t-butylperoxy)-hexyne-3), previously dry-blended, fed to a vent-equipped single screw extruder with a diameter of 65 mm and L/D of 28 and maintained at 225 °C and melted and kneaded at a resin temperature of 230 °C to obtain a modified polyolefin. The amounts of the acid added to the modified polyolefins are shown in Table 1.

Table 1

| Example No. | Blending Ratio of Polyolefins (%) | | | Amount of Acid Added (%) |
|---|---|---|---|---|
| 1 | PP | 30 | | 0.2 |
| | EPR | 70 | | |
| 2 | PP | 50 | | 0.2 |
| | EPR | 50 | | |
| 3 | PP | 70 | | 0.2 |
| | EPR | 30 | | |
| 4 | PP | 30 | | 0.2 |
| | EPDM | 70 | | |
| 5 | PP | 30 | | 0.2 |
| | EBR | 70 | | |
| 6 | PP | 20 | | 0.2 |
| | EPR | 60 | | |
| | LIDPE | 20 | | |
| 7 | PP | 100 | | 0.3 |
| 8 | EPR | 100 | | 0.1 |

Preparation of Polypropylene Compositions

A homopolypropylene (MFR = 3), nylon 6 ($\eta_{rel}$ = 2.5, hereinafter referred to as Ny 6) and the above described modified polyolefins were mixed in proportions as shown in Table 2, previously dry-blended, fed to a vent-equipped twin screw extruder with a diameter of 45 mm and L/D of 30 and maintained at 250 °C, melted and kneaded therein and then pelletized. The thus resulting pellets were subjected to injection molding at 230 °C to form test pieces for measuring the properties, which were then subjected to measurement of the properties, thus obtaining results as shown in Table 2:

Table 2

| | | Example 1 | 2 | 3 | 4 | 5 | 6 | 7 | 8 |
|---|---|---|---|---|---|---|---|---|---|
| PP | (parts) | 63 | 63 | 63 | 50 | 44 | 63 | 50 | 63 |
| Ny 6 | (parts) | 30 | 30 | 30 | 30 | 49 | 30 | 30 | 30 |
| Modified Polyolefin | (parts) | 7 | 7 | 7 | 20 | 7 | 7 | 20 | 7 |
| Blending Ratio of Polyolefin | (%) | PP 30 EPR 70 | PP 50 EPR 50 | PP 70 EPR 30 | PP 30 EPR 70 | PP 30 EPR 70 | PP 30 EPDM 70 | PP 30 EBR 70 | PP 20 EPR 60 LLDPE 20 |
| MFR | (g/10) | 3.0 | 3.3 | 3.5 | 2.0 | 3.0 | 2.9 | 2.1 | 3.3 |
| Tensile Strength | (kg/cm$^2$) | 500 | 510 | 530 | 350 | 560 | 500 | 310 | 530 |
| Tensile Elongation at Breakage | (%) | 22 | 20 | 19 | 40 | 30 | 25 | 37 | 20 |
| Flexual Strength | (kg/cm$^2$) | 520 | 530 | 550 | 390 | 580 | 510 | 340 | 540 |
| Flexual Modulus | (kg/cm$^2$) | 17000 | 17500 | 18000 | 13000 | 19000 | 16500 | 13000 | 18000 |
| Izod Impact Strength | (kg·cm/cm$^2$) | 14 | 13 | 12 | 33 | 15 | 15 | 25 | 13 |
| Gloss | (%) | 67 | 66 | 67 | 68 | 68 | 65 | 65 | 65 |

Comparative Examples 1 to 6

Preparation of compositions and test pieces was carried out similarly as to cases of blending individually modified products of the above described PP and EPR (hereinafter respectively referred to as CMPP and CMEPR)(Comparative Examples 1 and 2), cases of blending jointly CMPP and CMEPR (Comparative Examples 3 and 4) and cases of adding only the polyamide to the co-modified mixture of PP and EPR (Comparative Example 5 and 6) and the properties thereof were measured to obtain results as shown in Table 3.

Observation of the cross-sections of the compositions of Example 1 and Comparative Example 3 by a scanning type electron microscope after subjecting the cross-sections to extraction with formic acid to elute the phase of nylon 6 showed that the nylon 6 was more uniformly dispersed with a finer size of dispersed phase in Example 1 than in Comparative Example 3.

Table 3

| | Comparative Example 1 | 2 | 3 | 4 | 5 | 6 |
|---|---|---|---|---|---|---|
| PP (parts) | 63 | 63 | 63 | 50 | - | - |
| NY 6 (parts) | 30 | 30 | 30 | 30 | 30 | 50 |
| Modified Polyolefin (parts) | 7 | 7 | 7 | 20 | 70 | 50 |
| Blending Ratio of Modified Polyolefin (%) | CMPP 100 | CMEPR 100 | CMPP 30 CMEPR 70 | CMPP 30 CMEPR 70 | PP 30 EPR 70 | PP 30 EPR 70 |
| MFR (g/10) | 4.0 | 3.0 | 2.0 | 1.0 | 9.1 | 6.3 |
| Tensile Strength $(kg/cm^2)$ | 540 | 350 | 400 | 250 | 350 | 400 |
| Tensile Elongation at Breakage (%) | 10 | 20 | 15 | 20 | 5 | 7 |
| Flexual Strength $(kg/cm^2)$ | 550 | 360 | 410 | 250 | 400 | 420 |
| Flexual Modulus $(kg/cm^2)$ | 19000 | 9000 | 12000 | 8000 | 9000 | 12000 |
| Izod Impact Strength $(kg \cdot cm/cm^2)$ | 4 | 20 | 10 | 25 | 15 | 10 |
| Gloss (%) | 60 | 57 | 59 | 55 | 59 | 51 |

EP 0 235 876 B1

Examples 9 to 24 and Comparative Examples 7 to 12

Preparation of Modified Polypropylene

A crystalline homopolypropylene (MFR = 3.5 g/10 min, hereinafter referred to as homo PP), crystalline propylene-ethylene block copolymer (MFR = 3.0 g/10 min, ethylene content 7 %, hereinafter referred to as block PP), nylon 6 (relative viscosity = 2.60, hereinafter referred to as Ny 6) and nylon 66 (manufactured by ICI Co., MARANYL A 125 -commercial name-, hereinafter referred to as Ny 66) were blended in proportions shown in Table 4. To 100 parts of each of the resulting mixtures were added 0.3 part of maleic anhydride (hereinafter referred to as MA) or HA and 0.3 part of an organic peroxide (manufactured by Nippon Yushi Co., PERCUMYL -commercial name-), previously mixed at room temperature by a Henshel mixer, then fed to a twin screw extruder, kneaded at 220 °C and pelletized. In the resulting modified polypropylene (hereinafter referred to as modified PP), the amounts of the acids added thereto and MFR were respectively 0.32 % and 9.5 g/10 min in the case of the modified homo PP and 0.36 % and 8.2 g/10 min in the case of the modified block PP.

Preparation of Compositions

The modified homo PP, modified block PP, Ny 6, Ny 66, homo PP and block PP were mixed in combinations and in proportions as shown in Table 4, previously dry-blended at room temperature by a Henschel mixer, fed to a twin screw extruder, kneaded at 250 °C and pelletized. Test pieces were molded from the thus resulting compositions and subjected to measurement of the properties, thus obtaining results as shown in Table 4.

For comparison, comparative compositions were similarly prepared as to cases of using the modified PP containing no Ny 6 (Comparative Examples 7 and 12), using the modified PP containing Ny 6 in a proportion of less than 5 % (Comparative Example 8), using a composition having a polypropylene unit of less than 10 % (Comparative Example 9), using a composition containing only the modified PP (Comparative Example 10) and using a composition containing the modified PP in a proportion of less than 5 parts (Comparative Example 11) and the properties of the resulting compositions are shown in Table 4. As is evident from these results, the comparative compositions are inferior to the compositions of the present invention with respect to the various properties and in Comparative Example 10 using only the modified PP, in particular, there further arises a problem of largely coloring.

Observation of the cross-sections of the compositions of Example 10 and Comparative Example 7 by a scanning electron microscope after subjecting the cross-sections to extraction with formic acid to elute the phase of Ny 6 showed that the Ny 6 was more uniformly dispersed with a finer size of dispersed phase in Example 10 than in Comparative Example 7.

Table 4

| Example | | 9 | 10 | 11 | 12 | 13 | 14 | 15 | 16 | 17 | 18 | 19 | 20 | 21 | 22 | 23 | 24 |
|---|---|---|---|---|---|---|---|---|---|---|---|---|---|---|---|---|---|
| Modified PP | PP (%) | homo PP 70 | homo PP 70 | homo PP 70 | homo PP 90 | homo PP 70 | homo PP 70 | block PP 70 | homo PP 70 | homo PP 90 | homo PP 70 | homo PP 70 | homo PP 70 | homo PP 90 | homo PP 70 | homo PP 70 | block PP 70 |
| | Nylon (%) | Ny6 30 | Ny6 30 | Ny6 30 | Ny6 10 | Ny6 30 | Ny66 30 | Ny6 30 | Ny6 30 | Ny6 10 | Ny6 30 | Ny6 30 | Ny6 30 | Ny6 10 | Ny6 30 | Ny66 30 | Ny6 30 |
| | Acid | MA | MA | MA | MA | HA | MA | MA | MA | MA | MA | HA | HA | MA | HA | MA | MA |
| | (parts) | 70 | 50 | 90 | 70 | 70 | 70 | 70 | 20 | 90 | 20 | 30 | 20 | 10 | 20 | 20 | 20 |
| Nylon | (parts) | Ny6 30 | Ny6 50 | Ny6 10 | Ny6 30 | Ny6 30 | Ny66 30 | Ny6 30 | Ny6 80 | Ny6 10 | Ny6 30 | Ny6 40 | Ny6 50 | Ny6 50 | Ny6 30 | Ny66 30 | Ny6 30 |
| PP | (parts) | - - | - - | - - | - - | - - | - - | - - | - - | - - | homo PP 50 | homo PP 30 | homo PP 30 | homo PP 40 | homo PP 50 | homo PP 50 | homo PP 50 |
| PP Unit/Composition(%) | | 49 | 33 | 63 | 63 | 49 | 49 | 49 | 14 | 81 | 64 | 48 | 41 | 49 | 64 | 64 | 64 |
| MFR (g/10 min) | | 18.2 | 13.6 | 10.7 | 9.8 | 15.1 | * | 14.9 | 12.0 | 5.8 | 8.9 | 14.1 | 11.0 | 12.8 | 9.8 | * | 8.8 |
| Tensile Strength (kg/cm$^2$) | | 630 | 740 | 590 | 580 | 590 | 620 | 560 | 770 | 560 | 580 | 620 | 700 | 620 | 570 | 580 | 550 |
| Tensile Elongation at Breakage (%) | | 45.0 | 47.0 | 21.5 | 20.8 | 42.8 | 18.3 | 68.0 | 96.4 | 14.8 | 22.0 | 46.0 | 48.1 | 42.9 | 21.8 | 20.1 | 53.7 |
| Flexual Modulus (kg/cm$^2$) | | 16900 | 17000 | 16900 | 16800 | 16900 | 17800 | 13600 | 16200 | 16600 | 16800 | 16900 | 17000 | 16900 | 16800 | 17800 | 13200 |
| Izod Impact Strength @ 23 °C(kg·cm/cm$^2$) | | 9.7 | 10.2 | 7.9 | 7.6 | 8.8 | 9.0 | 14.0 | 12.0 | 7.2 | 7.4 | 9.5 | 9.8 | 9.2 | 7.3 | 7.1 | 14.6 |
| Gloss (%) | | 65.9 | 81.0 | 66.8 | 64.0 | 69.0 | 50.1 | 62.4 | 90.2 | 70.0 | 69.1 | 68.1 | 77.4 | 70.9 | 70.4 | 57.0 | 68.1 |
| Water Absorbing Ratio (%) | | 0.38 | 0.80 | 0.13 | 0.12 | 0.39 | 0.29 | 0.38 | 1.08 | 0.08 | 0.12 | 0.34 | 0.62 | 0.32 | 0.12 | 0.08 | 0.12 |

*not capable of measuring at 230 °C

EP 0 235 876 B1

Table 4 (continued)

| Comparative Example | | 7 | 8 | 9 | 10 | 11 | 12 |
|---|---|---|---|---|---|---|---|
| Modified PP | PP (%) | homo PP 100 | homo PP 98 | homo PP 10 | homo PP 70 | homo PP 70 | homo PP 100 |
| | Nylon (%) | - - | Ny6 2 | Ny6 90 | Ny6 30 | Ny6 30 | - - |
| | Acid | MA | MA | MA | MA | MA | MA |
| | (parts) | 50 | 70 | 50 | 100 | 2 | 20 |
| Nylon | | Ny6 | Ny6 | Ny6 | - | Ny6 | Ny6 |
| | (parts) | 50 | 30 | 50 | - | 98 | 30 |
| PP | | - | - | - | - | - | homo PP |
| | (parts) | - | - | - | - | - | 50. |
| PP Unit/Composition (%) | | 50 | 69 | 5 | 70 | 1.4 | 70 |
| MFR (g/10 min) | | 8.8 | 12.7 | 21.0 | 9.5 | 28.6 | 10.4 |
| Tensile Strength(kg/cm$^2$) | | 440 | 280 | 600 | 420 | 600 | 268 |
| Tensile Elongation at Breakage(%) | | 20.0 | 4.0 | 40.1 | 21.7 | 84.0 | 7.1 |
| Flexual Modulus (kg/cm$^2$) | | 15700 | 15000 | 12000 | 13300 | 9800 | 15000 |
| Izod Impact Strength @ 23°C(kg·cm/cm$^2$) | | 7.0 | 4.2 | 9.0 | 4.9 | 9.4 | 4.1 |
| Gloss (%) | | 66.0 | 42.1 | 62.0 | 64.0* | 70.0 | 44.9 |
| Water Absorbing Ratio (%) | | 0.40 | 0.24 | 2.01 | 0.21 | 2.4 | 0.24 |

Examples 25 to 37 and Comparative Examples 13 to 16

Preparation of Modified Polypropylene

The procedures of Examples 9 to 24 were repeated except varying the combinations of the components and blending proportions as shown in Table 5 to obtain modified polypropylenes of modified homo PP and modified block PP.

Preparation of Modified Low-Crystallinity Ethylene-α-Olefin Copolymers

80 parts of an ethylene-propylene random copolymer (MFR = 0.6 g/10 min, ethylene content 70 %, Mooney viscosity $ML_{1+4}$ (100 °C) = 70, hereinafter referred to as EP-1, 20 parts of a high density polyethylene (density 0.946, melt index 5 g/10 min (190 °C, 2.16 kg)), 1 part of MA and 0.2 part of the same organic peroxide as used in Examples 25 to 37 were previously mixed and melted and kneaded at 200 °C to thus obtain a modified low-crystallinity ethylene-α-olefin copolymer composition (amount of acid added 0.40 %, hereinafter referred to as EP-2).

Preparation of Compositions

The modified homo PP, modified block PP, Ny 6, Ny 66, homo PP, block PP, EP-1 and EP-2 were mixed in combinations and in proportions as shown in Table 5, previously dry-blended at room temperature by a Henshel mixer, fed to a twin screw extruder, kneaded at 250 °C and pelletized. Test pieces were molded by injection molding from the thus resulting compositions and subjected to measurement of the properties, thus obtaining results as shown in Table 5.

For comparison, comparative compositions were similarly prepared as to cases of using a composition a polypropylene unit of less than 10 % (Comparative Example 13), using the modified PP containing no polyamide (Comparative Example 14), using a composition containing no polyamide (B) (Comparative Example 15) and using a composition containing the modified PP in a proportion of less than 10 % (Comparative Example 16). The properties of the resulting compositions are shown in Table 5. As is evident from these results, the comparative compositions are inferior to the compositions of the present invention with respect to the various properties.

Observation of the cross-sections of the compositions of Example 26 and Comparative Example 13 by a scanning electron microscope after subjecting the cross-sections to extraction with formic acid to elute the phase of Ny 6 showed that the Ny 6 was more uniformly dispersed with a finer size of dispersed phase in Example 26 than in Comparative Example 13.

Table 5

| Example | | 25 | 26 | 27 | 28 | 29 | 30 | 31 | 32 | 33 | 34 | 35 | 36 | 37 |
|---|---|---|---|---|---|---|---|---|---|---|---|---|---|---|
| Modified PP(A) | PP (%) | homo PP 70 | homo PP 70 | homo PP 70 | homo PP 70 | homo PP 70 | homo PP 70 | homo PP 90 | homo PP 90 | homo PP 70 | homo PP 70 | block PP 70 | homo PP 70 | homo PP 70 |
| | Polyamide (%) | Ny6 30 | Ny6 30 | Ny6 30 | Ny6 30 | Ny6 30 | Ny6 30 | Ny6 10 | Ny6 10 | Ny6 30 | Ny66 30 | Ny6 30 | Ny6 30 | Ny6 30 |
| | Acid (parts) | MA 20 | MA 20 | MA 20 | MA 30 | MA 20 | MA 30 | MA 10 | MA 10 | HA 20 | MA 20 | MA 20 | MA 20 | MA 30 |
| Polyamide(B) (parts) | | Ny6 30 | Ny6 30 | Ny6 30 | Ny6 40 | Ny6 30 | Ny6 40 | Ny6 50 | Ny6 50 | Ny6 30 | Ny66 30 | Ny6 30 | Ny6 10 | Ny6 70 |
| PP (C) (parts) | | homo PP 50 | homo PP 50 | homo PP 50 | homo PP 30 | homo PP 50 | homo PP 30 | homo PP 40 | homo PP 40 | homo PP 50 | homo PP 50 | block PP 50 | homo PP 70 | - - |
| Low-Crystallinity EP (D) (parts) | | EP-1 10 | EP-1 30 | EP-1 50 | EP-1 30 | EP-2 30 | EP-2 30 | EP-1 30 | EP-2 30 | EP-2 30 | EP-2 30 | EP-2 30 | EP-1 10 | EP-1 10 |
| PP Unit/Composition(%) | | 58 | 49 | 43 | 39 | 49 | 39 | 38 | 38 | 49 | 49 | 49 | 76 | 19 |
| MFR (g/10 min) | | 8.3 | 5.0 | 4.7 | 9.8 | 4.8 | 5.3 | 11.8 | 6.8 | 5.4 | * | 4.9 | 4.7 | 15.9 |
| Tensile Strength(kg/cm$^2$) | | 640 | 540 | 480 | 610 | 540 | 510 | 610 | 570 | 550 | 570 | 500 | 620 | 740 |
| Tensile Elongation at Breakage (%) | | 29.7 | 40.0 | 57.4 | 28.8 | 30.0 | 31.1 | 31.2 | 30.8 | 29.8 | 28.4 | 59.0 | 18.0 | 21.0 |
| Flexual Modulus (kg/cm$^2$) | | 16500 | 11800 | 9500 | 13200 | 8800 | 10200 | 12100 | 9100 | 17000 | 12500 | 15700 | 10100 | 18800 |
| Izod Impact Strength @ - 30°C (kg.cm/cm$^2$) | | 8.2 | 15.0 | 38.9 | 8.2 | 23.2 | 30.9 | 7.9 | 28.7 | 22.7 | 18.0 | 54.0 | 6.9 | 14.0 |
| Gloss (%) | | 67.8 | 66.9 | 63.4 | 68.0 | 67.0 | 67.8 | 70.4 | 65.1 | 69.1 | 52.0 | 64.0 | 70.5 | 64.0 |
| Water Absorbing Ratio (%) | | 0.17 | 0.13 | 0.1' | 0.28 | 0.10 | 0.26 | 0.24 | 0.25 | 0.1' | 0.09 | 0.10 | 0.01 | 1.10 |

* not capable of measuring at 230 °C

Table 5 (continued)

| Comparative Example | | 13 | 14 | 15 | 16 |
|---|---|---|---|---|---|
| Modified PP (A) | PP (%) | homo PP 70 | homo PP 100 | homo PP 70 | homo PP 70 |
| | Polyamide (%) | Ny6 30 | - - | Ny6 30 | Ny6 30 |
| | Acid | MA | MA | MA | MA |
| | (parts) | 2 | 20 | 50 | 2 |
| Polyamide (B) | | Ny6 | Ny6 | - | Ny6 |
| | (parts) | 98 | 30 | - | 50 |
| PP (C) | | - | - | - | - |
| | (parts) | - | 50 | 50 | 48 |
| Low-Crystallinity EP (D) | | EP-1 | EP-1 | EP-1 | EP-1 |
| | (parts) | 30 | 30 | 30 | 30 |
| PP Unit/Composition(%) | | 1.1 | 54 | 65 | 38 |
| MFR (g/10) | | 19.7 | 9.0 | 8.0 | 8.6 |
| Tensile Strength (kg/cm$^2$) | | 680 | 480 | 370 | 330 |
| Tensile Elongation at Breakage (%) | | 18.3 | 14.9 | 7.0 | 5.2 |
| Flexual Modulus (kg/cm$^2$) | | 14000 | 10200 | 6900 | 11800 |
| Izod Impact Strength @-30°C (kg.cm/cm$^2$) | | 4.7 | 6.0 | 3.4 | 3.2 |
| Gloss (%) | | 58.2 | 40.1 | 68.0 | 38.2 |
| Water Absorbing Ratio (%) | | 2.0 | 0.25 | 0.10 | 0.29 |

Examples 38 to 44 and Comparative Examples 17 to 25

Preparation of Modified Polypropylene

100 parts of a crystalline polypropylene (MFR = 2.0 g/10 min), 1 part of HA and 0.2 part of an organic peroxide (manufactured by Nippon Yushi Co., Perhexyne 25 B -commercial name-) were mixed at room temperature by a Henshel mixer, fed to an extruder, kneaded at 200 °C and pelletized. The thus obtained modified polypropylene (hereinafter referred to as modified PP) had a content of the acid added of 0.2 % and an MFR of 50 g/10 min.

Nylon 6 ($\eta_{rel}$ = 2.60, MFR = 30.4 g/10 min, or $\eta_{rel}$ = 2.30, MFR = 36.7 g/10 min) and the above described modified PP were mixed in proportions as shown in Table 6, fed to a double shaft extruder, kneaded at 250 °C and pelletized.

The pellets obtained in the first stage and homopolypropylenes (referred to as PP) were mixed in proportions as shown in Table 6, fed to a double shaft extruder, kneaded at 250 °C and pelletized, thus obtaining compositions of nylon/modified PP/PP. The properties of the resulting compositions are shown in Table 6.

For comparison, comparative compositions were similarly prepared as to cases of blending simultaneously all the components in the first stage (Comparative Examples 17 to 19, 22, 24) and using compositions prepared in such a manner that the MFR ratio of the kneaded mixture in the first stage to PP was outside the scope of 0.5 to 2 (Comparative Examples 20, 21, 23, 25) and subjected to measurement of the properties to obtain results as shown in Table 6.

Observation of the cross-sections of the compositions of Example 40 and Comparative Example 19 by a scanning electron microscope after subjecting the cross-sections to extraction with formic acid to elute the phase of the nylon 6 showed that the nylon 6 was more uniformly dispersed with a finer size of dispersed phase in Example 40 than in Comparative Example 19.

Example 45

The procedure of Example 39 was repeated except using nylon 66 (MFR = 30 g/10 min (275 °C), manufactured by ICI Co., MARANYL A 125 -commercial name-) instead of the nylon 6 and melting and kneading at 275 °C. The resulting kneaded mixture had an MFR of 10.8 g/10 min (275 °C). Then the kneaded mixture and PP (MFR = 6.3 g/10 min (275 °C))were similarly fused and kneaded to obtain a composition having the properties shown in Table 6.

Table 6

| | Example | | | | | | | | Comparative Example | | | | | | | | |
|---|---|---|---|---|---|---|---|---|---|---|---|---|---|---|---|---|---|
| | 38 | 39 | 40 | 41 | 42 | 43 | 44 | 45 | 17 | 18 | 19 | 20 | 21 | 22 | 23 | 24 | 25 |
| Number of Blending | 2 | 2 | 2 | 2 | 2 | 2 | 2 | 2 | 1 | 1 | 1 | 2 | 2 | 1 | 2 | 1 | 2 |
| Polyamide | Ny6 | Ny6 | Ny6 | Ny6 | Ny6 | Ny6 | Ny6 | Ny66 | Ny6 | Ny6 | Ny6 | Ny6 | Ny6 | Ny6 | Ny6 | Ny6 | Ny6 |
| ($n_{rel}$) | 2.60 | 2.60 | 2.60 | 2.60 | 2.60 | 2.60 | 2.30 | - | 2.60 | 2.60 | 2.60 | 2.60 | 2.60 | 2.60 | 2.60 | 2.30 | 2.30 |
| (%) | 15 | 30 | 50 | 60 | 30 | 20 | 30 | 30 | 15 | 30 | 50 | 50 | 50 | 30 | 30 | 30 | 30 |
| Modified PP(%) | 3.5 | 7 | 11.6 | 14 | 30 | 20 | 30 | 7 | 3.5 | 7 | 11.6 | 11.6 | 11.6 | 30 | 30 | 30 | 30 |
| First Blend MFR (g/10) | 12.6 | 12.6 | 12.6 | 12.6 | 3.3 | 3.3 | 10.2 | 10.8 | - | - | - | 12.6 | 12.6 | - | 3.3 | - | 10.2 |
| PPMFR (g/10) | 15.0 | 15.0 | 15.0 | 15.0 | 3.0 | 3.0 | 15.8 | 6.3 | 15.0 | 15.0 | 15.0 | 0.5 | 30 | 3.0 | 15.0 | 15.0 | 0.5 |
| (%) | 81.5 | 63 | 38.4 | 26 | 40 | 60 | 40 | 63 | 81.5 | 63 | 38.4 | 38.4 | 38.4 | 40 | 40 | 40 | 40 |
| First Blend MFR/PPMFR | 0.84 | 0.84 | 0.84 | 0.84 | 1.1 | 1.1 | 0.68 | 1.7 | - | - | - | 25.2 | 0.42 | - | 0.22 | - | 20.4 |
| Tensile Strength (kg/cm²) | 493 | 618 | 692 | 762 | 425 | 392 | 416 | 620 | 485 | 594 | 668 | 632 | 662 | 372 | 378 | 368 | 384 |
| Tensile Elongation at Breakage (%) | 30.1 | 18.3 | 26.9 | 34.5 | 20.6 | 25.5 | 20.5 | 17.2 | 25.8 | 11.7 | 20.0 | 25.2 | 16.0 | 17.2 | 13.0 | 14.9 | 18.0 |
| Flexural Modulus (kg/cm²) | 17200 | 20000 | 21600 | 22400 | 14500 | 15200 | 14800 | 21000 | 17100 | 20000 | 21600 | 21000 | 21800 | 14400 | 14500 | 14700 | 14000 |
| Izod Impact Strength (kg.cm/cm²) | 5.6 | 6.0 | 6.2 | 5.6 | 6.5 | 6.0 | 6.1 | 5.8 | 4.9 | 5.3 | 5.1 | 5.0 | 3.6 | 5.5 | 3.9 | 5.2 | 5.6 |
| Gloss (%) | 75.0 | 70.3 | 72.6 | 72.0 | 85.5 | 85.4 | 86.0 | 73.9 | 68.0 | 61.8 | 66.0 | 42.0 | 45.0 | 78.6 | 75.0 | 75.2 | 60.1 |

## Claims

1. A thermoplastic resin composition comprising 1 to 95% by weight of a polyamide and 99 to 5% by weight of a chemically co-modified mixture of a polyolefin and a polyamide obtained by modifying the mixture with an unsaturated carboxylic acid or anhydride thereof.

2. A thermoplastic resin composition as claimed in claim 1, wherein the polyamide to be mixed with the chemically co-modified mixture and the co-modified mixture are blended to give a polyolefin unit in an amount of 10 to 90% by weight.

3. A thermoplastic resin composition as claimed in claim 1 or claim 2, wherein the polyamide to be mixed with the chemically co-modified mixture has a relative viscosity of at least 0.5.

4. A thermoplastic resin composition as claimed in claim 1 or claim 2, wherein the polyamide is selected from nylon 6, nylon 12, nylon 9, nylon 11, nylon 66 and nylon 610.

5. A thermoplastic resin composition as claimed in any one of the preceding claims, wherein the polyolefin is selected from homopolymers of ethylene or α-olefins, and copolymers of ethylene with at least one α-olefin and copolymers of at least two α-olefins, the α-olefin preferably being propylene, butene-1, pentene-1, hexene-1 or 4-methyl-pentene-1.

6. A thermoplastic resin composition as claimed in any one of the preceding claims, wherein the mixture of the polyolefin and the polyamide comprises from 99 to 1% of the polyolefin and from 99 to 1% by weight of the other polymer.

7. A thermoplastic resin composition as claimed in claim 6, wherein the chemically modified mixture is obtained from a mixture of 10 to 95% by weight of a polyolefin and 90 to 5% by weight of a polyamide.

8. A thermoplastic resin composition as claimed in any one of the preceding claims, wherein the chemically modified mixture is obtained by grafting a mixture of a polyolefin and a polyamide with an unsaturated carboxylic acid or derivative thereof, the carboxylic acid or derivative thereof being in a proportion of 0.001 to 10% by weight.

9. A thermoplastic resin composition as claimed in claim 8, wherein the unsaturated carboxylic acid or derivative thereof is acrylic acid, maleic acid, fumaric acid, tetrahydrophthalic acid, itaconic acid, citraconic acid, crotonic acid, isocrotonic acid or endobicyclo-(2,2,1)-5-heptene-2,3-dicarboxylic acid or an anhydride or ester thereof.

10. A thermoplastic resin composition as claimed in any one of the preceding claims, which further contains at least one additive, for example a heat stabilizer, ultraviolet absorber, nucleating agent, antistatic agent, lubricant, flame retarders, coloring agent, inorganic filler (e.g. glass fiber), plasticizer or a mixture of two or more thereof.

11. A thermoplastic resin composition comprising (A) 5 to 95 parts by weight of a co-modified polyolefin obtained by reacting a mixture of 10 to 95% by weight of a polyolefin and 90 to 5% by weight of a polyamide with an unsaturated carboxylic acid or derivative thereof, (B) 5 to 95 parts by weight of a polyamide and (C) 0 to 90 parts by weight of a polyolefin, (A) + (B) + (C) being 100 parts by weight and the composition having a polyolefin unit in an amount of 10 to 90% by weight, the composition optionally further containing 5 to 80 parts by weight of a low-crystallinity ethylene-α-olefin copolymer based on 100 parts by weight of (A) + (B) + (C).

**Patentansprüche**

1. Thermoplastische Harzzusammensetzung enthaltend 1 bis 95 Gew.-% von einem Polyamid und 99 bis 5 Gew.-% von einer chemisch co-modifizierten Mischung von einem Polyolefin und einem Polyamid erhalten durch Modifikation der Mischung mit einer ungesättigten Carbonsäure oder deren Anhydrid.

2. Thermoplastische Harzzusammensetzung nach Anspruch 1, in der das mit der chemisch co-modifizierten Mischung zu mischende Polyamid und die co-modifizierte Mischung vermischt sind, um eine Polyolefineinheit in einer Menge von 10 bis 90 Gew.-% zu ergeben.

**3.** Thermoplastische Harzzusammensetzung nach Anspruch 1 oder 2, in der das mit der chemisch co-modifizierten Mischung zu mischende Polyamid eine relative Viskosität von mindestens 0,5 aufweist.

**4.** Thermoplastische Harzzusammensetzung nach Anspruch 1 oder 2, in der das Polyamid aus Nylon 6, Nylon 12, Nylon 9, Nylon 11, Nylon 66 und Nylon 610 ausgewählt ist.

**5.** Thermoplastische Harzzusammensetzung nach einem der vorhergehenden Ansprüche in der das Polyolefin aus Homopolymeren von Ethylen oder α-Olefinen und Copolymeren von Ethylen mit mindestens einem α-Olefin und Copolymeren von mindestens zwei α-Olefinen ausgewählt ist, wobei das α-Olefin vorzugsweise Propylen, Buten-1, Penten-1, Hexen-1 oder 4-Methyl-Penten-1 ist.

**6.** Thermoplastische Harzzusammensetzung nach einem der vorhergehenden Ansprüche, in der die Mischung von dem Polyolefin und dem Polyamid 99 bis 1 Gew.-% des Polyolefins und 99 bis 1 Gew.-% des anderen Polymers enthält.

**7.** Thermoplastische Harzzusammensetzung nach Anspruch 6, in der die chemisch modifizierte Mischung aus einer Mischung von 10 bis 95 Gew.-% eines Polyolefins und 90 bis 5 Gew.-% eines Polyamids erhalten wird.

**8.** Thermoplastische Harzzusammensetzung nach einem der vorhergehenden Ansprüche, in der die chemisch modifizierte Mischung durch Pfropfen einer Mischung von einem Polyolefin und einem Polyamid mit einer ungesättigten Garbonsäure oder einem Derivat davon erhalten wird, wobei die Carbonsäure oder deren Derivat in einem Anteil von 0,001 bis 10 Gew.-% vorliegt.

**9.** Thermoplastische Harzzusammensetzung nach Anspruch 8, in der die ungesättigte Carbonsäure oder deren Derivat Acrylsäure, Maleinsäure, Fumarsäure, Tetrahydrophthalsäure, Itaconsäure, Citraconsäure, Crotonsäure, Isocrotonsäure oder Endobicyclo-(2,2,1)-5-hepten-2,3-dicarbonsäure oder ein Anhydrid oder Ester davon ist.

**10.** Thermoplastische Harzzusammensetzung nach einem der vorhergehenden Ansprüche, die weiterhin mindestens einen Zusatzstoff zum Beispiel einen Wärmestabilisator, Ultraviolettabsorptionsmittel, Nukleierungsmittel, antistatisches Mittel, Gleitmittel, Flammverzögerer, Farbstoff, anorganisches Füllmittel (zum Beispiel Glasfaser), Weichmacher oder eine Mischung aus zwei oder mehreren davon enthält.

**11.** Thermoplastische Harzzusammensetzung enthaltend (A) 5 bis 95 Gew.-Teile eines co-modifizierten Polyolefins erhalten durch Umsetzung einer Mischung von 10 bis 95 Gew.-% eines Polyolefins und 90 bis 5 Gew.-% eines Polyamids mit einer ungesättigten Carbonsäure oder deren Derivat, (B) 5 bis 95 Gew.-Teile eines Polyamids und (C) 0 bis 90 Gew.-Teile eines Polyolefins, wobei (A) + (B) + (C) 100 Gew.-Teile ausmachen und die Zusammensetzung eine Polyolefineinheit in einer Menge von 10 bis 90 Gew.-% aufweist, wobei die Zusammensetzung gegebenenfalls weiter 5 bis 80 Gew.-Teile eines niedrigkristallinen Ethylen-α-Olefincopolymers enthält, bezogen auf 100 Gew.-Teile von (A) + (B) + (C).

**Revendications**

**1.** Composition de résine thermoplastique comprenant de 1 à 95 % en poids d'un polyamide et 99 à 5 % en poids d'un mélange, co-modifié chimiquement, d'une polyoléfine et d'un polyamide, obtenu en modifiant le mélange avec un acide carboxylique insaturé ou son anhydride.

**2.** Composition de résine thermoplastique selon la revendication 1, dans laquelle le polyamide à mélanger avec le mélange co-modifié chimiquement et le mélange co-modifié chimiquement sont mélangés pour donner une unité polyoléfine en une quantité valant de 10 à 90 % en poids.

**3.** Composition de résine thermoplastique selon la revendication 1 ou la revendication 2, dans laquelle le polyamide à mélanger avec le mélange co-modifié chimiquement a une viscosité relative d'au moins 0,5.

**4.** Composition de résine thermoplastique selon la revendication 1 ou la revendication 2, dans laquelle le polyamide est choisi parmi le Nylon 6, le Nylon 12, le Nylon 9, le Nylon 11, le Nylon 66 et le Nylon 610.

**5.** Composition de résine thermoplastique selon l'une quelconque des revendications précédentes, dans laquelle la polyoléfine est choisie parmi des homopolymères d'éthylène ou d'α-oléfines, des copolymères d'éthylène avec au moins une α-oléfine et des copolymères d'au moins deux α-oléfines, l'α-oléfine étant de préférence le propylène, le butène-1, le pentène-1, l'hexène-1 ou le 4-méthyl-pentène-1.

**6.** Composition de résine thermoplastique selon l'une quelconque des revendications précédentes, dans laquelle le mélange de la polyoléfine et du polyamide comprend de 99 à 1 % en poids de polyoléfine et de 99 à 1 % en poids de l'autre polymère.

**7.** Composition de résine thermoplastique selon la revendication 6, dans laquelle le mélange modifié chimiquement est obtenu à partir d'un mélange de 10 à 95 % en poids d une polyoléfine et 90 à 5 % en poids d'un polyamide.

**8.** Composition de résine thermoplastique selon l'une quelconque des revendications précédentes, dans laquelle le mélange modifié chimiquement est obtenu par greffage d'un mélange d'une polyoléfine et d un polyamide avec un acide carboxylique insaturé ou un dérivé de celui-ci, l'acide carboxylique ou son dérivé étant contenu en une proportion de 0,001 à 10 % en poids.

**9.** Composition de résine thermoplastique selon la revendication 8, dans laquelle l'acide carboxylique insaturé ou son dérivé est l'acide acrylique, l'acide maléique, l'acide fumarique, l'acide tétrahydrophtalique, l'acide itaconique, l'acide citraconique, l'acide crotonique, l'acide isocrotonique ou l'acide endobicyclo-(2,2,1)-5-heptène-2,3-dicarboxylique ou un anhydride ou un ester de ceux-ci.

**10.** Composition de résine thermoplastique selon l'une quelconque des revendications précédentes, contenant en outre au moins un additif, par exemple un stabilisant thermique, un absorbant d'ultraviolet, un agent de nucléation, un agent antistatique, un lubrifiant, des agents ignifuges, un agent de coloration, une charge inorganique (par exemple des fibres de verre), un plastifiant ou un mélange de deux de ces substances ou plus.

**11.** Composition de résine thermoplastique comprenant (A) de 5 à 95 parties en poids d'une polyoléfine comodifiée, obtenue par réaction d'un mélange de 10 à 95 % en poids d'une polyoléfine et 90 à 5 % en poids d'un polyamide avec un acide carboxylique insaturé ou un dérivé de celui-ci, (B) de 5 à 95 parties en poids d'un polyamide et (C) de 0 à 90 parties en poids d'une polyoléfine, (A) + (B) + (C) valant 100 parties en poids et la composition contenant une unité polyoléfine en une quantité valant de 10 à 90 % en poids, la composition contenant éventuellement, en outre, de 5 à 80 parties en poids d'un copolymère éthylène de faible cristallinité-α-oléfine, par rapport à 100 parties en poids de (A) + (B) + (C).